# EUROPÄISCHE PATENTSCHRIFT

(11) **EP 2 344 847 B1**
(45) Veröffentlichungstag und Bekanntmachung des Hinweises auf die Patenterteilung: **16.05.2018**
(21) Anmeldenummer: 09736209.9
(22) Anmeldetag: 13.10.2009
(51) Int. Cl.: G01D 5/347, G12B 7/00

(54) **LÄNGENMESSEINRICHTUNG**
LENGTH MEASURING DEVICE
DISPOSITIF DE MESURE DE LONGUEUR

(30) Priorität: 31.10.2008 DE 102008043353
(43) Veröffentlichungstag der Anmeldung: 20.07.2011
(73) Patentinhaber: Dr. Johannes Heidenhain GmbH, 83301 Traunreut (DE)
(72) Erfinder: AFFA, Alfred, 83371 Stein a. d. Traun (DE); HAUNREITER, Johannes, 84489 Burghausen (DE)
(86) Internationale Anmeldenummer: PCT/EP2009/063315
(87) Internationale Veröffentlichungsnummer: WO 2010/049265

(56) Entgegenhaltungen:
- EP-A2- 1 862 769
- WO-A1-2004/038338
- DE-A1- 3 124 723
- DE-A1- 4 017 858
- DE-A1-102007 031 976
- JP-A- 2005 084 015
- JP-U- H0 540 821
- US-A- 6 084 234

## Beschreibung

Die Erfindung betrifft eine Längenmesseinrichtung nach dem Oberbegriff des Anspruchs 1.

Derartige Längenmesseinrichtungen, wie sie beispielsweise in der DE 29 29 989 A1 beschrieben sind, dienen zur Messung von Längen sowie Wegen und werden insbesondere bei Bearbeitungsmaschinen zur Messung der Relativbewegung eines Werkzeugs bezüglich eines zu bearbeitenden Werkstücks, bei Koordinatenmessmaschinen und vermehrt auch in der Halbleiterindustrie eingesetzt.

Dabei wird als Maßverkörperung ein Maßstab verwendet, der vor Umwelteinflüssen geschützt in einem Gehäuse untergebracht ist. Temperaturänderungen innerhalb des Gehäuses verursachen eine Längenänderung des Maßstabs in Abhängigkeit des Maßstabmaterials. Diese Längenänderungen führen zu Messfehlern.

Um derartige Temperaturänderungen möglichst gering zu halten, wird gemäß der DE 101 64 404 A1 vorgeschlagen, den Innenraum der gekapselten Längenmesseinrichtung zu temperieren, indem er durch ein geregeltes Kühlmedium durchflossen wird.

Dadurch soll erreicht werden, dass der Maßstab das Temperaturniveau der Werkzeugmaschine annimmt. Nachteilig dabei ist, dass Temperaturänderungen, die durch elektrische Bauelemente der Längenmesseinrichtung selbst generiert werden, dabei nicht berücksichtigt werden.

In der EP 1 862 769 A2 und der US 6,084,234 A werden Maßnahmen zur Ableitung von Wärme in Positionsmesseinrichtungen beschrieben. Diese Maßnahmen allein sind für Längenmesseinrichtungen der gattungsgemäßen Art unzureichend.

Die DE 31 24 723 A1 offenbart eine Längenmesseinrichtung, bei der die Lichtquelle Wärme in Richtung eines Maßstabes abstrahlt. Diese Wärme wird dann weiter zu einem Träger abgeführt.

Nachteilig dabei ist, dass zuerst Strahlungswärme in der Abtasteinheit generiert wird, diese Strahlungswärme in den Maßstab oder ein damit verbundenes Element eingeleitet wird und dann erst diese Strahlungswärme über ein Wärmeleitelement weitergeleitet wird.

Gemäß der JP 2005 084015 A sind zur Ableitung der Wärme einer Lichtquelle Mittel vorgesehen, die im Inneren des Gehäuses der Längenmesseinrichtung einen Luftstrom erzeugen.

Die Anforderungen an Längenmesseinrichtungen werden immer höher, es wird laufend eine höhere Auflösung sowie eine höhere Genauigkeit und Reproduzierbarkeit der Positionsmessung gefordert. Dabei soll ein kompakter mechanischer Aufbau sowie eine einfache und störungssichere Messwertgenerierung und Messwertübertragung vorhanden sein.

Diese Anforderungen erfordern eine gekapselte Längenmesseinrichtung mit geschützt untergebrachtem Maßstab. Eine hohe Auflösung bedingt einen immer geringeren und über die gesamte Messlänge konstanten Abtastabstand. Dies wird einerseits durch einen relativ kleinen Abtastabstand von kleiner 100 µm erreicht und andererseits durch Führung der Abtasteinheit am Maßstab und / oder am Gehäuse, wobei zur ungestörten präzisen Führung der Abtasteinheit der Mitnehmer über eine nur in Messrichtung steife Kupplung an der Abtasteinheit angekoppelt ist. Diese Kupplung ermöglicht in allen anderen Richtungen eine Bewegung des Mitnehmers ohne Rückwirkung auf die präzise Führung und Bewegung der Abtasteinheit in Messrichtung.

Ein kompakter Aufbau und eine störungssichere Messwertgenerierung und Messwertübertragung bedingt die Integration von immer mehr elektrischen Bauelementen in der Abtasteinheit selbst. So werden hierzu vermehrt Sensorchips eingesetzt, in denen auf kleinstem Raum ein Array von Abtastsensoren, beispielsweise lichtempfindliche Detektoren bei lichtelektrisch abtastbarem Maßstab, sowie Signalverarbeitungsmittel wie beispielsweise A/D-Wandler, Verstärker, Mikroprozessoren und Schnittstellen angeordnet sind. Daraus resultiert eine vermehrte Wärmeerzeugung in der Abtasteinheit, die bedingt durch den erforderlichen kleinen Abtastabstand den Maßstab unverhältnismäßig stark erwärmt. Diese Erwärmung führt zu Längenänderungen des Maßstabs und zu Messungenauigkeiten.

Der Erfindung liegt die Aufgabe zugrunde, eine Längenmesseinrichtung mit hoher Messgenauigkeit zu schaffen.

Diese Aufgabe wird erfindungsgemäß durch die Merkmale des Anspruchs 1 gelöst.

Mit der Erfindung wird ein kompakter Aufbau einer Längenmesseinrichtung ermöglicht, wobei auch eine hohe Messgenauigkeit und eine reproduzierbare Positionsmessung erreichbar ist.

Gemäß der Erfindung wird ein Wärmeleitpfad zwischen einem wärmeerzeugenden Sensorchip der Abtasteinheit und dem Gehäuse der Längenmesseinrichtung geschaffen.

Durch das Vorsehen eines Wärmeleitelementes zwischen dem Sensorchip und dem Gehäuse der Längenmesseinrichtung wird dieser Wärmeleitpfad zwischen dem Sensorchip und dem Gehäuse geschaffen, um an dem Sensorchip generierte Wärme an das Gehäuse zu übertragen. Die am Wärmeleitpfad beteiligten Komponenten weisen einen geringen thermischen Widerstand auf. Mit der Erfindung wird also gezielt ein Wärmeleitpfad vom Sensorchip in Richtung des Gehäuses geschaffen.

Die Wärmeübertragung vom Wärmeleitelement der Abtasteinheit zum Gehäuse erfolgt über einen Spalt, der derart ausgebildet und dimensioniert ist, dass einerseits eine gute Wärmeübertragung garantiert ist und andererseits die freie Beweglichkeit der Abtasteinheit relativ zum Gehäuse nicht behindert wird.

Das Wärmeleitelement kann aus mehreren Abschnitten bestehen, die entsprechend optimiert sind.

In den abhängigen Ansprüchen sind vorteilhafte Ausgestaltungen der Erfindung angegeben.

Die Erfindung wird mit Hilfe eines Ausführungsbeispiels näher erläutert.

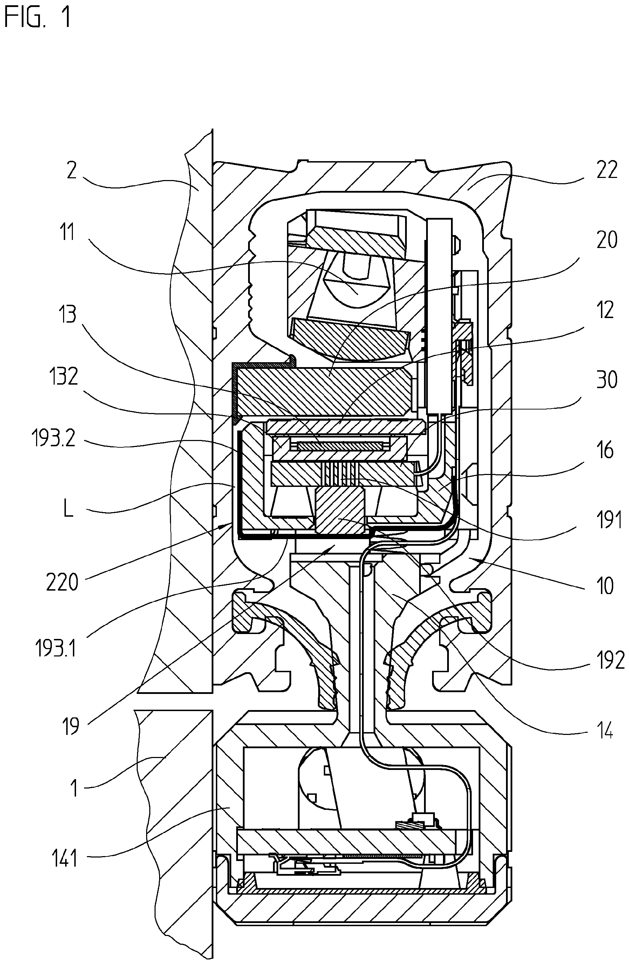

Dabei zeigt
- Figur 1: einen Querschnitt einer Längenmesseinrichtung;

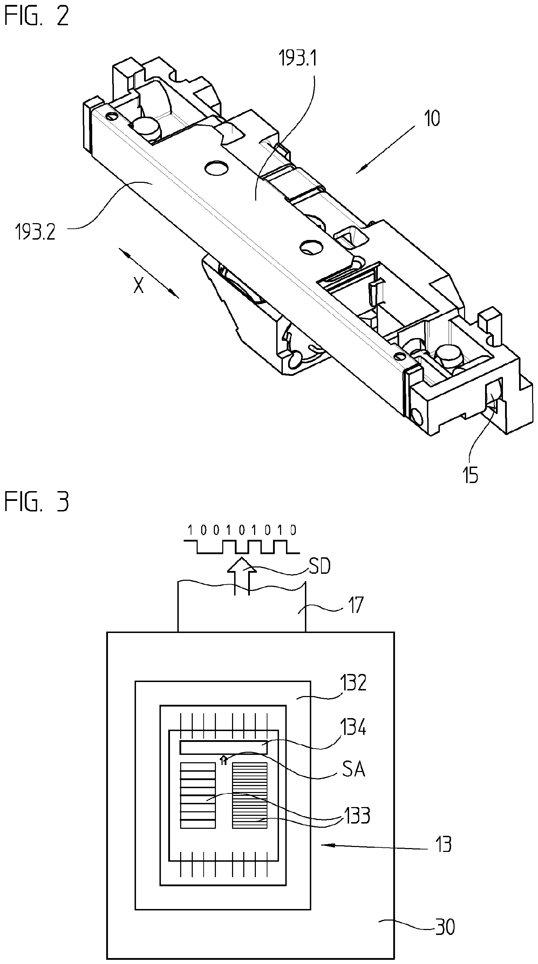

- Figur 2: eine perspektivische Ansicht der Abtasteinheit der Längenmesseinrichtung gemäß Figur 1, und
- Figur 3: eine Draufsicht auf den Sensorchip der Abtasteinheit gemäß Figur 2.

Die Erfindung ist am Beispiel einer optischen Längenmesseinrichtung dargestellt, mit der die Relativlage zweier in Messrichtung X gegeneinander verschiebbarer Objekte 1 und 2 gemessen werden soll. Dabei wird ein transparenter Maßstab 20 von einer relativ zum Maßstab 20 in Messrichtung X bewegbaren Abtasteinheit 10 abgetastet. Der Maßstab 20 weist eine nicht dargestellte Messteilung auf, die von der Abtasteinheit 10 im Durchlicht abgetastet wird. Dazu umfasst die Abtasteinheit 10 eine Beleuchtungseinheit 11, die ein Lichtbündel aussendet, welches kollimiert durch den Maßstab 20 und weiter durch eine transparente Abtastplatte 12 verläuft und schließlich auf lichtempfindliche Abtastsensoren 133 eines Sensorchips 13 trifft. Das Lichtbündel wird dabei von der Messteilung am Maßstab 20 positionsabhängig moduliert.

Der Maßstab 20 ist innerhalb eines Gehäuses 22 angeordnet, welches wiederum an dem zu messenden Objekt 2, beispielsweise einem Maschinenbett einer Werkzeugmaschine befestigt ist. Der Maßstab 20 ist dabei in bekannter Weise mit dem Gehäuse 22 verbunden, beispielsweise durch Kleben oder Klemmen. Das Gehäuse 22 weist in seiner Längsrichtung in Messrichtung X verlaufend einen Schlitz auf, der durch dachförmig geneigte Dichtlippen verschlossen ist, durch die ein Mitnehmer 14 mit einem schwertförmigen Mittelstück hindurchgreift. Der Mitnehmer 14 weist einen Montagebereich 141 auf, mit dem er an dem relativ zum Maschinenbett 2 verschiebbaren Objekt 1, beispielsweise einem Schlitten der Werkzeugmaschine befestigbar ist.

Die Abtasteinheit 10 ist zur exakten Parallelführung längs des Maßstabs 20 an Führungsflächen des Maßstabs 20 und / oder des Gehäuses 22 geführt. Im dargestellten Ausführungsbeispiel ist die Abtasteinheit 10 über Rollen 15 an zwei senkrecht zueinander ausgerichteten Oberflächen des Maßstabs 20 geführt, wobei Federn dazu dienen, eine Andruckkraft an die Führungsflächen des Maßstabs 20 zu generieren.

Zwischen der Abtasteinheit 10 und dem Mitnehmer 14 ist eine Kupplung angeordnet, welche die Abtasteinheit 10 in Messrichtung X steif und quer dazu nachgiebig an den Mitnehmer 14 ankoppelt. Durch diese Maßnahme werden Fehlausrichtungen des Mitnehmers 14 nicht auf die Abtasteinheit 10 übertragen. Die Kupplung ist in an sich bekannter Weise beispielsweise als in Messrichtung steifer Federdraht oder als Kugelkupplung ausgebildet.

Der Sensorchip 13 weist ein Array von lichtempfindlichen Abtastsensoren 133 auf, welche das von der Messteilung positionsabhängig modulierte Licht der Beleuchtungseinheit 11 empfangen und positionsabhängige elektrische Abtastsignale SA generieren. Der Sensorchip 13 ist ein elektrisches Bauelement, welches zusätzlich zu den lichtempfindlichen Abtastsensoren 133 einen integrierten Schaltkreis enthält, der die Abtastsignale SA weiterverarbeitet. Derartige Sensorchips 13 werden auch ASIC oder OPTO-ASIC bezeichnet. Der Sensorchip 13 weist als integrierte Mittel 134 zur Signalverarbeitung beispielsweise A/D-Wandler, Verstärker, Mikroprozessoren und auch Schnittstelleneinheiten auf, welche die Abtastsignale SA zu Ausgangssignalen SD aufbereiten und wandeln, die an einer Ausgangsleitung 17 anstehen und nach außen geführt werden. Wenn die Messteilung ein absoluter Code ist, verarbeitet der Sensorchip 13 die Abtastsignale SA zu einem absoluten mehrstelligen digitalen Codewort SD, das über eine serielle Schnittstelleneinheit bitseriell am Ausgang 17 des Sensorchips 13 bereitgestellt wird. Zum elektrischen Anschluss der Längenmesseinrichtung an eine Folgeelektronik weist der Mitnehmer 14 eine Anschlussmöglichkeit auf. Die Ausgangssignale SD des Sensorchips 13 werden über die Ausgangsleitung 17 zu dieser Anschlussmöglichkeit, beispielsweise eine Steckverbindung, geführt.

Durch die im Sensorchip 13 integrierte Signalverarbeitung der Abtastsignale SA zu einem die Position definierenden mehrstelligen Codewort SD ist eine weitgehend störungssichere Messwertgenerierung gewährleistet und es wird eine störungsunempfindliche serielle Übertragung von digitalen Positionsmesswerten SD vom Sensorchip 13 ausgehend ermöglicht. Nachteilig bei einer derartigen integrierten Signalverarbeitung auf kleinstem Raum ist der relativ hohe Energiebedarf und somit die generierte Verlustwärme.

Gemäß der Erfindung wird die im Sensorchip 13 generierte Wärme gezielt über einen Wärmeleitpfad zum Gehäuse 22 geleitet. Das Gehäuse 22 bildet somit die Wärmesenke. Der Sensorchip 13 ist hierzu mit einem Wärmeleitelement 19 verbunden, das in Richtung des Gehäuses 22 geführt ist und einer Innenwand 220 des Gehäuses 22 mit einem geringen Spalt L gegenübersteht. Das Wärmeleitelement 19 sowie die Kontaktierung des Wärmeleitelementes 19 an dem Sensorchip 13 ist derart ausgestaltet, dass ein guter Wärmeübergang und eine gute Wärmeleitung gewährleistet ist, um die an dem Sensorchip 13 generierte Wärme zum Gehäuse 22 zu übertragen.

Der Spalt L ist insbesondere ein Luftspalt. Der Spalt L kann in nicht gezeigter Weise aber auch mit einem anderen Medium gefüllt sein, z.B. einer Flüssigkeit. Diese Flüssigkeit kann in dem Spalt durch Adhäsionskräfte gehalten werden oder, wenn die Flüssigkeit eine magnetische Flüssigkeit (Ferrofluid) ist, durch Magnetkraft.

Als Sensorchip 13 ist beispielsweise ein gehäuster Sensorchip 13 verwendet, der ein Gehäuse 132 aus Keramik aufweist, dessen Abdeckung transparent ist und in bekannter Weise als Abtastplatte 12 fungiert. Der Sensorchip 13 ist auf einer Leiterplatte 30 angeordnet und daran elektrisch kontaktiert. Auf einer Seite der Leiterplatte 30 ist der Sensorchip 13 elektrisch kontaktiert. Um auf der anderen Seite der Leiterplatte 30 einen zweiten Abschnitt 192 des Wärmeleitelementes 19 gut wärmeleitend kontaktieren zu können, ist ein erster Abschnitt 191 des Wärmeleitelementes 19 in Form einer Durchkontaktierung der Leiterplatte 30 vorgesehen. Diese Durchkontaktierung 191 kann ein in eine Bohrung der Leiterplatte 30 eingebrachtes hochwärmeleitendes Material sein oder ein bolzenförmiges Element oder auch aus mehreren Durchkontaktierungen bestehen.

Der erste Abschnitt 191 bildet eine gut wärmeleitende Verbindung der Unterseite des Sensorchips 13 mit dem zweiten Abschnitt 192. Dieser zweite Abschnitt 192 ist elektrisch isolierend ausgebildet, um keine elektrischen Störungen vom Wärmeleitelement 19 zum Sensorchip 13 zu leiten. Hierzu besteht dieser zweite Abschnitt 192 vorzugsweise aus Keramik.

An dem zweiten Abschnitt 192 ist wiederum ein dritter Abschnitt 193 des Wärmeleitelementes 19 angeordnet, der nun weiter in Richtung des Gehäuses 22 geführt ist. Dieser dritte Abschnitt 193 ist auf möglichst kurzem Weg in Richtung des Gehäuses 22 geführt und derart ausgebildet, dass er möglichst großflächig der Innenwand 220 des Gehäuses mit geringem Luftspalt L gegenübersteht. Der Luftspalt L ist dabei derart dimensioniert, dass die Relativbewegung der Abtasteinheit 10 relativ zum Gehäuse 22 nicht behindert wird und andererseits eine gute Wärmeübertragung zum Gehäuse 22 gewährleistet ist. Der Luftspalt L ist vorzugsweise etwa 0,1 mm bis 1 mm, insbesondere bis 0,5mm.

Der dritte Abschnitt 193 des Wärmeleitelementes 19 ist vorzugsweise ein gut wärmeleitendes Blechteil, also ein Wärmeableitblech, das einen ersten Bereich 193.1 aufweist, der quer zur Innenwand 220 des Gehäuses 22 verläuft und einen zweiten Bereich 193.2 aufweist, der dann parallel zur Innenwand 220 verläuft und der Innenwand 220 somit möglichst großflächig gegenübersteht. Dieser zweite Bereich 193.2 hat vorzugsweise eine Fläche von mindestens 200 mm², die dem Gehäuse 22 mit geringem Abstand gegenüberliegt. Für das Wärmeableitblech 193 ist ein Material zu wählen, das einerseits möglichst leicht ist, da die Abtasteinheit 10 ein geringes Gewicht haben soll, und andererseits eine gute Wärmeleitfähigkeit aufweist. Als Material für das Wärmeleitblech 193 eignet sich deshalb beispielsweise Aluminium.

Im konkreten Ausführungsbeispiel besteht somit das Wärmeleitelement 19 aus einem ersten Abschnitt 191, gebildet von Durchkontaktierungen, aus einem zweiten Abschnitt 192, gebildet von einem Zwischenstück aus elektrisch isolierendem Material, insbesondere Keramik, und aus einem dritten Abschnitt 193, gebildet von einem Wärmeableitblech. Die Materialien dieser Abschnitte 191, 192, 193 sowie die Verbindungen dieser Abschnitte 191, 192, 193 untereinander sind derart gewählt, dass eine gute Wärmeleitung in Richtung des Gehäuses 22 gewährleistet ist.

Die Beleuchtungseinheit 11, die Abtastplatte 12, der Sensorchip 13, der Mitnehmer 14, die Rollen 15 und das Wärmeleitelement 19 sind an einem Grundkörper 16 der Abtasteinheit 10 befestigt und mit diesem relativ zum Maßstab 20 und somit auch relativ zu dem Gehäuse 22 in Messrichtung X verschiebbar. Der Grundkörper 16 ist aus einem Material mit geringem Ausdehnungskoeffizienten sowie geringer Wärmeleitfähigkeit, insbesondere aus Kunststoff. Die Wärmeleitfähigkeit des Grundkörpers16 ist erheblich geringer als die Wärmeleitfähigkeit des Wärmeleitelementes 19.

Die gut wärmeleitende Ankopplung des Wärmeleitelementes 19 an den Sensorchip 13 erfolgt alternativ durch direkten Anschluss des dritten Abschnitts 193 des Wärmeleitelementes 19 am Sensorchip 13, beispielsweise durch möglichst großflächiges Anlöten. Diese gut wärmeleitende Ankopplung kann direkt an einer Fläche, insbesondere an der Unterseite eines ungehäusten Sensorchips bzw. an der Unterseite des Gehäuses 132 des gehäusten Sensorchips 13 erfolgen. Die Unterseite ist dabei die dem wärmeerzeugenden Chipbereich direkt gegenüberliegende Fläche. Eine gut wärmeleitende Ankopplung zwischen dem Sensorchip 13 und dem Wärmeleitelement 19 wird erreicht, wenn die Ankoppelfläche größer als 5 mm² ist, um den Wärmeübergangswiderstand möglichst klein zu halten.

Durch das Wärmeleitelement 19 wird die vom Sensorchip 13 generierte Wärme gezielt zum massiven Gehäuse 22 geleitet. Das Gehäuse 22 eignet sich besonders zur Wärmeabfuhr, da es zum Anbau an das zu messende Objekt 2 besonders stabil ausgeführt ist und in der Regel aus Metall, z.B. Aluminium, also gut wärmeleitendem Material ausgeführt ist.

In nicht gezeigter Weise kann es von Vorteil sein, wenn das Wärmeleitelement 19 gegenüber dem Innenraum des Gehäuses 22 zumindest teilweise wärmeisolierend ausgebildet ist, beispielsweise mit einem wärmeisolierenden Überzug versehen ist, wozu sich beispielsweise Neopren eignet. Dieser Überzug kann auch eine Beschichtung sein. Diese Wärmeisolierung ist natürlich nicht an dem der Innenwand 220 des Gehäuses 22 gegenüberliegenden Oberflächenbereich des Wärmeleitelementes 19 vorgesehen. Durch diese Maßnahme wird erreicht, dass die vom Sensorchip 13 aufgenommene Wärme gezielt außerhalb des Gehäuses 22 geleitet wird und nicht der Innenraum des Gehäuses 22 übermäßig aufgewärmt wird. Es wird gezielt ein gegenüber der Umgebung wärmeisolierter Wärmeleitpfad vom Sensorchip 13 zum Gehäuse 22 geschaffen.

Im Messbetrieb, wenn also das Gehäuse 22 an das zu messende Objekt 2 angebaut ist, hat das Gehäuse 22 wärmeleitenden Kontakt mit dem zu messenden Objekt 2, so dass auch an dieses Wärme abgegeben werden kann. In nicht gezeigter Weise kann die Wärmeabfuhr auch noch dadurch unterstützt werden, dass am Gehäuse 22 und zwar im Bereich des Luftspaltes L und / oder zwischen dem Gehäuse 22 und dem zu messenden Objekt 2 Kühlmittel vorgesehen werden. Diese Kühlmittel können Kühlrippen oder ein mit Kühlmedium durchflossener Kanal sein.

Die Erfindung kann auch bei einer Längenmesseinrichtung eingesetzt werden, bei der der Maßstab reflektierend ausgebildet ist und sich der Sensorchip auf der gleichen Seite wie die Beleuchtungseinheit befindet. Ebenso kann der Maßstab magnetisch, kapazitiv oder induktiv abtastbar ausgeführt sein, wobei dann der Sensorchip angepasste Sensorelemente beinhaltet, um positionsabhängige Abtastsignale zu generieren..

In vorteilhafter Weise ist das elektrische Bauelement ein Sensorchip 13, der Abtastsensoren 133 zur Abtastung einer absoluten Codierung des Maßstabes 20 und Generierung von Abtastsignalen SA sowie Mittel 134 zur Verarbeitung dieser Abtastsignale SA zu einem Positionsmesswert SD aufweist, wobei der Positionsmesswert SD vom Sensorchip 13 als Ausgangssignal in Form eines mehrstelligen digitalen Codewortes bitseriell bereitgestellt wird.

## Patentansprüche

1. Längenmesseinrichtung zum Messen der Relativlage zweier Objekte (1, 2), mit
- einem Maßstab (20) in einem Gehäuse (22);
- einer relativ zur Einheit Maßstab (20) und Gehäuse (22) in einer Messrichtung X verschiebbaren Abtasteinheit (10), wobei die Abtasteinheit (10) innerhalb des Gehäuses (22) angeordnet ist und zumindest ein wärmeerzeugendes elektrisches Bauelement (13) aufweist;
- einem Mittel, das dazu ausgelegt ist, um an dem elektrischen Bauelement (13) generierte Wärme an das Gehäuse (22) zu übertragen, **dadurch gekennzeichnet, dass**
- das Mittel ein Wärmeleitpfad ist, der von einem Wärmeleitelement (19) gebildet ist, das einerseits gut wärmeleitend an dem elektrischen Bauelement (13) angekoppelt ist, und das weiter zu dem Gehäuse (22) verläuft, derart, dass es dem Gehäuse (22) mit einem geringen Spalt (L) gegenüberliegt, so dass am elektrischen Bauelement (13) generierte Wärme über das Wärmeleitelement (19) zum Spalt (L) und über den Spalt (L) zum Gehäuse (22) übertragen wird, und
- das elektrische Bauelement ein Sensorchip (13) ist, der Abtastsensoren (133) zur Abtastung des Maßstabes (20) und Generierung von Abtastsignalen (SA) sowie Mittel (134) zur Verarbeitung dieser Abtastsignale (SA) zu einem Positionsmesswert (SD) aufweist, wobei der Sensorchip (13) auf einer Leiterplatte (30) angeordnet ist und das Wärmeleitelement (19) einen ersten Abschnitt (191) aufweist, der von dem Sensorchip (13) durch die Leiterplatte (30) führt und zumindest einen weiteren Abschnitt (193) aufweist, der zum Spalt (L) führt, und der einen flächigen Bereich (193.2) aufweist, der mit einem geringen Spalt (L) einer Innenwand (220) des Gehäuses (22) gegenüberliegend angeordnet ist.

2. Längenmesseinrichtung nach Anspruch 1, **dadurch gekennzeichnet, dass** der flächige Bereich (193.2) des Wärmeleitelementes (19) der Innenwand (220) des Gehäuses (22) mit einer Fläche von zumindest 200 mm² mit einem Spalt (L) von kleiner 1mm gegenüberliegend angeordnet ist.

3. Längenmesseinrichtung nach Anspruch 1 oder 2, **dadurch gekennzeichnet, dass** der, der Innenwand des Gehäuses (22) gegenüberliegende flächige Bereich (193.2) des Wärmeleitelementes (19) ein Wärmeleitblech ist.

4. Längenmesseinrichtung nach einem der vorhergehenden Ansprüche, **dadurch gekennzeichnet, dass** zumindest ein Abschnitt (192) des Wärmeleitelementes (19) aus einem elektrisch isolierenden Material besteht.

5. Längenmesseinrichtung nach einem der vorhergehenden Ansprüche, **dadurch gekennzeichnet, dass** der erste Abschnitt (191) zumindest eine Durchkontaktierung ist.

6. Längenmesseinrichtung nach einem der vorhergehenden Ansprüche, **dadurch gekennzeichnet, dass** der Positionsmesswert (SD) vom Sensorchip (13) als Ausgangssignal in Form eines mehrstelligen digitalen Codewortes bitseriell bereitgestellt wird.

## Claims

1. Length measuring device for measuring the relative position of two objects (1, 2), having
- a scale (20) in a housing (22);
- a scanning unit (10) that can be displaced relative to the unit comprising scale (20) and housing (22) in a measuring direction X, the scanning unit (10) being arranged within the housing (22) and having at least one heat-generating electric component (13);
- a means which is designed to transfer the heat generated on the electric component (13) to the housing (22), **characterized in that**
- the means is a heat conducting path which is formed by a heat conducting element (19), which on one side is coupled in a highly heat-conducting manner to the electric component (13) and which extends further to the housing (22), in such a way that it is located opposite the housing (22) with a small gap (L), so that heat generated on the electric component (13) is transferred via the heat conducting element (19) to the gap (L) and via the gap (L) to the housing (22), and
- the electric component is a sensor chip (13), which has scanning sensors (133) for scanning the scale (20) and generating scanning signals (SA), and means (134) for processing these scanning signals (SA) to form a position measured value (SD), wherein the sensor chip (13) is arranged on a circuit board (30) and the heat conducting element (19) has a first section (191), which leads from the sensor chip (13) through the circuit board (30), and has at least one further section (193), which leads to the gap (L) and has a flat region (193.2) which is arranged to be located with a small gap (L) opposite an inner wall (220) of the housing (22).

2. Length measuring device according to Claim 1, **characterized in that** the flat region (193.2) of the heat conducting element (19) is arranged to be located opposite the inner wall (220) of the housing (22) with an area of at least 200 mm² and with a gap (L) of less than 1 mm.

3. Length measuring device according to Claim 1 or 2, **characterized in that** the flat region (193.2) of the heat conducting element (19) that is located opposite the inner wall of the housing (22) is a heat conducting plate.

4. Length measuring device according to one of the preceding claims, **characterized in that** at least one section (192) of the heat conducting element (19) consists of an electrically insulating material.

5. Length measuring device according to one of the preceding claims, **characterized in that** the first section (191) is at least one through contact.

6. Length measuring device according to one of the preceding claims, **characterized in that** the position measured value (SD) is provided by the sensor chip (13) bit-serially as an output signal in the form of a multi-digit digital code word.

## Revendications

1. Dispositif de mesure de longueur destiné à mesurer la position relative de deux objets (1, 2), comprenant
- une échelle de graduation (20) dans un boîtier (22) ;
- une unité de balayage (10) pouvant être déplacée par rapport à l'échelle de graduation (20) et au boîtier (22) dans une direction de mesure X, dans lequel l'unité de balayage (10) est disposée à l'intérieur du boîtier (22) et comporte au moins un composant électrique générateur de chaleur (13);
- un moyen qui est conçu pour transmettre la chaleur générée au niveau du composant électrique (13) vers le boîtier (22), **caractérisé en ce que**
- ledit moyen est un trajet de conduction thermique formé par un élément de conduction thermique (19) qui est couplé au composant électrique (13) d'une manière conductrice de chaleur, et qui se prolonge vers le boîtier (22) de telle sorte qu'il fait face au boîtier (22) avec une petite fente (L), de manière à ce que la chaleur générée au niveau du composant électrique (13) soit transmise par l'intermédiaire de l'élément conducteur de chaleur (19) à la fente (L) et par l'intermédiaire de la fente (L) au boîtier (22), et
- le composant électrique est une puce de détecteur (13) qui comporte des capteurs d'exploration (133) destinés à explorer l'échelle de graduation (20) et à générer des signaux de balayage (SA) et des moyens (134) destinés à traiter lesdits signaux d'exploration (SA) afin d'obtenir une valeur de mesure de position (SD), dans lequel la puce de détecteur (13) est disposée sur une carte de circuit imprimé (30) et l'élément conducteur de chaleur (19) comporte une première partie (191) qui part de la puce de détecteur (13) et passe à travers la carte de circuit imprimé (30) et comporte au moins une autre partie (193) qui conduit jusqu'à la fente (L) et qui comporte une zone plate (193.2) disposée avec une petite fente (L) en face d'une paroi intérieure (220) du boîtier (22) .

2. Dispositif de mesure de longueur selon la revendication 1, **caractérisé en ce que** la zone plate (193.2) de l'élément conducteur de chaleur (19) est disposée en face de la paroi intérieure (220) du boîtier (22) avec une surface d'au moins 200 mm² et avec une fente (L) inférieure à 1 mm.

3. Dispositif de mesure de longueur selon la revendication 1 ou 2, **caractérisé en ce que** la zone plate (193.2) de l'élément conducteur de chaleur (19) située en face de la paroi intérieure du boîtier (22) est une plaque conductrice de chaleur.

4. Dispositif de mesure de longueur selon l'une des revendications précédentes, **caractérisé en ce qu'**au moins une partie (192) de l'élément conducteur de chaleur (19) est constituée d'un matériau électriquement isolant.

5. Dispositif de mesure de longueur selon l'une des revendications précédentes, **caractérisé en ce que** la première partie (191) est au moins une métallisation traversante.

6. Dispositif de mesure de longueur selon l'une des revendications précédentes, **caractérisé en ce que** la valeur de mesure de position (SD) est fournie sous forme de série binaire par la puce de détecteur (13) en tant que signal de sortie présentant la forme d'un mot de code numérique à plusieurs chiffres.
